# EUROPÄISCHE PATENTSCHRIFT

(11) **EP 0 994 557 B1**
(45) Veröffentlichungstag und Bekanntmachung des Hinweises auf die Patenterteilung: **22.06.2005**
(21) Anmeldenummer: 99120313.4
(22) Anmeldetag: 12.10.1999
(51) Int. Cl.: H02M 7/00

(54) **Umrichter mit niederinduktivem Kondensator im Zwischenkreis**
Converter with low inductance capacitor in the intermediate circuit
Convertisseur avec condensateur à basse inductance dans le circuit intermédiaire

(30) Priorität: 13.10.1998 DE 19847029
(43) Veröffentlichungstag der Anmeldung: 19.04.2000
(73) Patentinhaber: Semikron Elektronik GmbH, D-90253 Nürnberg (DE)
(72) Erfinder: Schimanek, Ernst, 90489 Nürnberg (DE)

(56) Entgegenhaltungen:
- EP-A- 0 766 504
- DE-A- 4 338 277
- US-A- 4 853 828
- US-A- 5 130 918
- US-A- 5 574 312

## Beschreibung

Die Erfindung beschreibt einen Umrichter für hohe Anforderungen mit niederinduktiven Kondensatoren im Zwischenkreisaufbau nach den Merkmalen des Oberbegriffes des Anspruches 1.

Bereits in der DE 40 05 333 A1 bzw. der hierauf basierenden US 5,130,918 wird ein elektronischer Leistungsschalter offenbart, wobei in den Zuleitungen zu den hier als separate gehauste Einzelhalbleiterbauelemente ausgeführten Leistungsschaltern eine niederinduktiver Ausgestaltung offenbart wird. Die notwendigen Kondensatoren werden nahe benachbart zu den einzelnen auf Kühlschienen montierten Einzelhalbleiterbauelementen angeordnet.

Die DE 43 38 277 A1 offenbart ein flüssigkeitsgekühltes Stromrichtermodul mit Beschaltungselementen für abschaltbare Leistungsha!bleiter auf Das Stromrichtermodul weist weiterhin eine Sensorik sowie eine Ansteuerschaltung auf. Bei den Leistungshalbleitern handelt es sich hierbei um Scheibenzellen, also um gehauste Einzelhalbleiterbauelemente, nach dem seit langem bekannten Stand der Technik.

Umrichter mit großer Leistungsdichte sind nach dem Stand der Technik hinlänglich bekannt. In DE 41 10 339 C2 wird ein Wechselrichter mit Gleichspannungszuleitungen dargestellt, der durch mehrere in Serie geschaltete Glättungskondensatoren in eng benachbarter Weise zu mindestens einer Gleichspannungszuleitung gekennzeichnet ist und auch dadurch, daß die Gleichspannungszuleitungen plattenförmig gestaltet worden sind. Die Anordnung der diskret aufgebauten Kondensatoren zum Zwischenkreis und den Schaltungsteilen des Umrichters wird in Figuren dargestellt und textlich beschrieben.

DE 42 32 763 C2 schlägt zur Realisierung eines Wechselrichters den Einsatz von Mehrlagenverbindungsschienen vor und beschreibt dabei deren induktivitätsarme Positionierung. Ausgangspunkt ist auch bei dieser Lösung der Einsatz von diskret aufgebauten Kondensatoren.

Eine relativ darauf bezogene noch besser definierte Lage der äußeren Anschlüsse von diskreten Kondensatoren wird in DE 196 19 538 A1 beschrieben. Zur Realisierung einer möglichst induktivitätsarm aufgebauten Umrichter- Anordnung werden hier weiterhin mehrere Vorschläge zur Verschaltung der Gleichstrom führenden Schaltungsteile unterbreitet.

Zusammenfassend kann festgestellt werden, daß leistungselektronische Systeme nach dem Stand der Technik aus verschiedenen Einzelkomponenten zu einem kompletten Umrichter aufgebaut werden. Die Leistungselektronik in Form ihrer Schalter ist der Hauptverlusterzeuger und ist daher auf eine Kühleinrichtung montiert.

In neueren Konstruktionen von Umrichtern ist die Ansteuerung in den leistungselektronischen Aufbau integriert und mittels Lötstiften oder Steckverbindungen zum Leistungsteil stoffbündig oder stoffschlüssig elektrisch kontaktiert. Der Zwischenkreis ist mit Elektrolyt- oder Folienkondensatoren bestückt. Die Zwischenkreisverschienung wird vorteilhaft in Sandwichform niederinduktiv ausgeführt und die Verbindung zur Leistungselektronik wird mittels einer Schraubverbindung lösbar hergestellt.

Schraub- aber auch in gleichem Maße Lötverbindungen bilden zusätzliche Induktivitäten in den Kommutierungskreisen und beschränken damit die maximal mögliche Zwischenkreisspannung. Außerdem müssen für die Schraubverbindungen Platz und Zugänglichkeit vorgesehen werden, was einem kompakten Aufbau mit hoher Packungsdichte widerspricht.

Die vorliegende Erfindung hat die Aufgabe, eine kompakte und zuverlässige elektronische Schaltungsanordnung in der Form eines Umrichters für hohe Anforderungen mit niederinduktiv im Zwischenkreisaufbau integrierte Kondensatoren vorzustellen.

Diese Aufgabe wird durch die Maßnahmen des kennzeichnenden Teiles des Anspruchs 1 gelöst, vorteilhafte Ausführungsvarianten sind in den nachgeordneten Ansprüchen aufgezeigt.

Der erfinderische Gedanke soll nachfolgend auf der Grundlage von skizzierten nicht maßstabsgerechten Darstellungen näher erläutert werden.
**Fig. 1** zeigt einen Querschnitt eines erfinderischen Schaltungsaufbaus.
**Fig. 2** skizziert den erfinderischen Aufbau in Draufsicht.

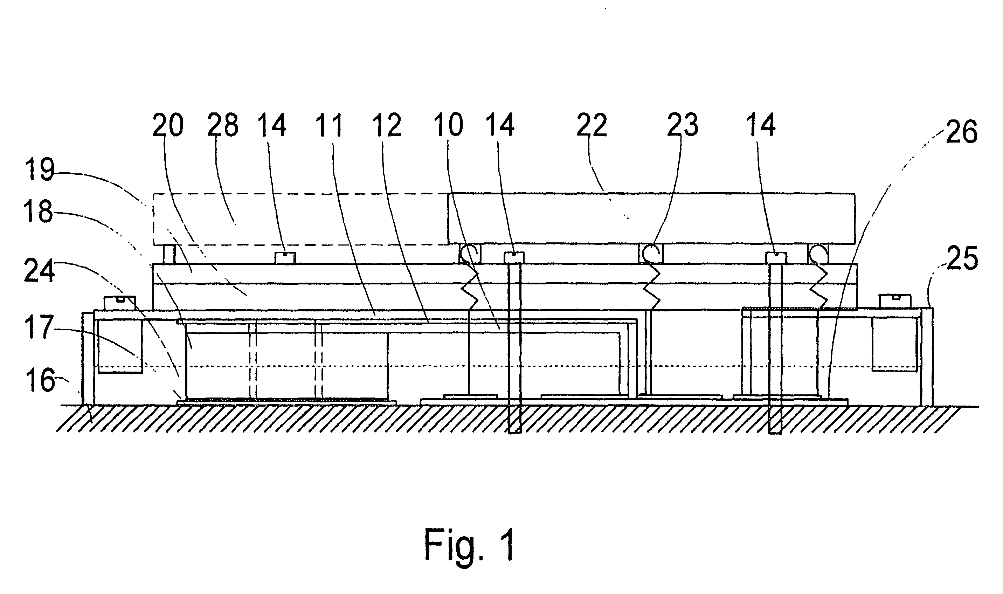

**Fig. 1** zeigt einen Querschnitt eines erfinderischen Schaltungsaufbaus. In einem Gehäuse (25) ist die Leistungselektronik (26) in der Form von schaltungsgerecht verbundenen Dioden und Transistoren als Leistungshalbleiterbauelemente, die auf Isolierkeramiken aufgelötet worden sind, positioniert. Erfindungsgemäß werden in dem gleichen Gehäuse auch die Zwischenkreiskondensatoren(18) und die zugehörige extrem niederinduktive Zwischenkreisverschienung (10, 11, 12) als Hauptkomponenten eingebaut.

Die elektrischen Kontakte werden über Federn (23) mit ausreichendem Querschnitt und entsprechender Federkraft hergestellt. Die Kraft wird zwischen dem mehrfach eingespannten Brückenelement (19) mittels Verschrauben (14) gegen den Kühlkörper (16) aufgebracht. Die Druckeinrichtung, bestehend aus mindestens einem Druckfedernsystem (20) und einem Brückenelement (19) kann für den leistungselektronischen Teil (26) und für den Kondensatorteil (18) gemeinsam oder getrennt aufgebaut werden.

Zum Schutz gegen Umwelteinflüsse wird ein Isolationsverguß (24) in das gegen den Kühlkörper (16) abgedichtete Gehäuse (25) eingebracht. Die Hilfskomponenten, wie beispielhaft die Ansteuerschaltung (22), wahlweise mit digitaler Signalverarbeitung (28), sind in gleicher Weise über Kontaktfedern (23) mit der Leistungselektronik (26) verbunden. Im System des erfinderischen Umrichters integriert und ebenfalls mit Kontaktfedern zur Signalweiterleitung verbunden sind nicht dargestellte Temperatur- und Stromsensoren.

Die Erfindung erlaubt die Herstellung eines kompakten Spannungszwischenkreisumrichters mit sehr hoher Packungsdichte, dessen Zwischenkreisverbindung zur Leistungselektronik ohne induktivitätserhöhende Schraub- oder Lötanschlüsse auskommt und damit extrem niederinduktiv ist, außerdem wird damit mindestens eine Schnittstelle eliminiert.

Weiterhin ist es möglich, das erfinderische System durch die Integration der Schaltungsteile Leistungselektronik, Zwischenkreiskondensator, Zwischenkreisverschienung, Sensorik, Ansteuerschaltung und Mikrokontroller in mindestens teilweisem hybridem Aufbau sehr kompakt zu realisieren und es werden die notwendigen Schnittstellen reduziert.

Durch die Integration von Leistungselektronik (26) und Zwischenkreiskondensatoren (18) auf einer Ebene eines Kühlkörpers (16) kann die Kühlung der Kondensatoren über den Kühlkörper bei Verwendung einer Wärmeleitplatte (17) leicht und sehr wirksam hergestellt werden.

Der Aufbau eines kompletten erfinderischen Umrichters mit allen erforderlichen Schaltungsteilen ermöglicht durch einfach zu realisierende Modifikationen der Lage der einzelnen Schaltungsteile zueinander eine flexible und variable Anschlußgestaltung, wodurch sehr günstig Umrichteranordnungen für unterschiedliche Einsatzgebiete ohne Zeitschlupf nach dem Baukastenprinzip gestaltet werden können.

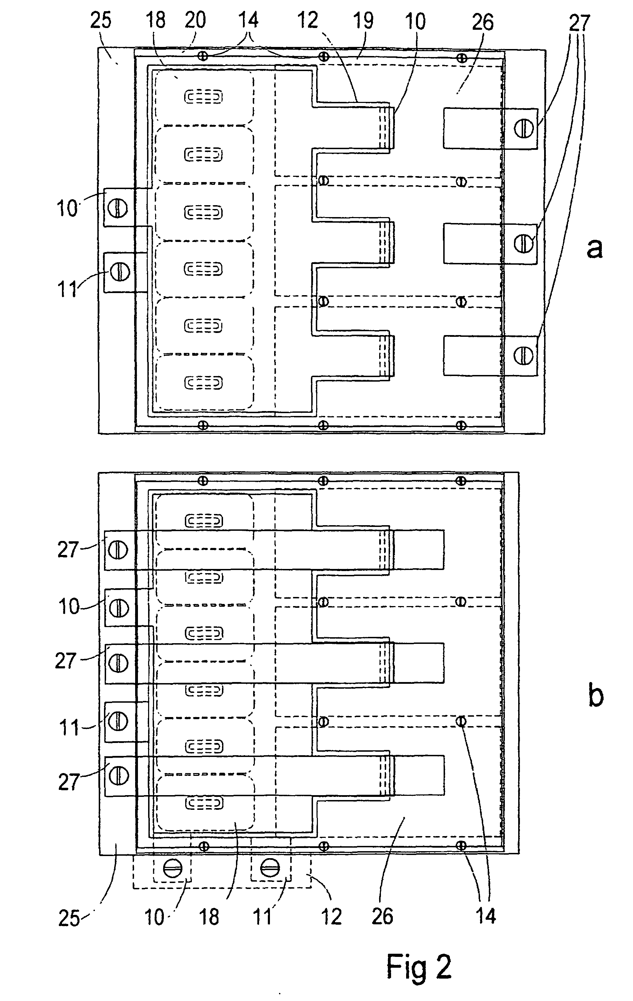

**Fig. 2** skizziert den erfinderischen Aufbau in Draufsicht. Es sind zwei Beispiele in Fig. a und b dargestellt. In Fig. 2a ist die Lage der einzelnen Teile des Schaltungsaufbaus ersichtlich. Auf einer ebenen Fläche des Gehäuses (25) ist linksseitig der Gleichstromabgriff aus der plattenförmig gestalteten Zwischenkreisverschienung (10, 11) dargestellt. Unterhalb dieser Ebene des Zwischenkreises (10, 11, 12) befinden sich sechs Kondensatoren (18) in erfinderischer Aufbauweise eng beieinander gestapelt.

In hybrider Aufbauweise schließt sich die Leistungselektronik (26), dargestellt in Form der gestrichelten Umrisse der drei Isolierkeramiken mit den Wechselstromleistungsanschlüssen (27) für die verschiedenen Strom- bzw. Spannungsphasen an. Mittels Gehäuse (25) und Brückenelement (19) wird der bereits beschriebene Aufbau komplettiert.

In der Form der Gestaltung eines Umrichters nach Fig. 2a liegen die Gleichstromanschlüsse (10, 11) gegenüber denen der Wechselstromanschlüsse (27). Diese Form mag sehr sinnvoll für Gleichstromsteller oder Wechselrichter sein. Ein Aufbau nach der skizzierten Form in Fig. 2b mit Gleichstromanschlüssen (10, 11) zwischen den Wechselstromanschlüssen (27) ist bei Verwendung als Einsteckmodul vorzuziehen.

Denkbar ist jedoch ein Herausführen der Gleichstromanschlüsse (10, 11), wie sie straffiert in Fig. 2b auch angedeutet ist. Durch die flächige Gestaltung des Zwischenkreises ist es möglich, an allen vier Seiten des Umrichters Gleichstromausgänge zu gestalten, wodurch die flexible Anpassung des erfinderischen Umrichters an alle denkbaren Einsatzfälle gegeben ist.

Alle übrigen Elemente der Umrichter- Schaltungsanordnung, wie Verschraubung (14), Brückenelement (19), Druckfedernsystem (20) und deren Wirkung wurden bereits zu Fig. 1 dargestellt.

Durch das konstruktive Einbeziehen der Kondensatoren in den Leistungsteil von Umrichtern und damit alternativ in das gleiche Gehäuse der Leistungsschalter wird Platz gespart und Schnittstellen werden reduziert. Die sonst nach dem Stand der Technik erforderliche externe Verschienung mit den erforderlichen diskret aufgebauten Kondensatoren wird aufgehoben und die Einheit des kompletten Umrichters mit allen Schaltungsteilen (Leistungsschalter in hybrider Aufbauweise als Leistungselektronik, der modernen Sensorik, Zwischenkreisverschienung, Kondensatoren, Ansteuerschaltung und Mikrokontroller) kann als ein geschlossenes Modul gestaltet werden, was industriell hergestellt von großem Vorteil ist. Mit in solcher Art hergestellten Modulen ist es möglich, parasitäre Oberwellenschwingungen, wie sie zu Funkstörungen führen, bei erfinderischen Umrichtermodulen komplett abzuschirmen.

Im Zuge der Verdichtung der Leistungen in einzelnen Schaltungsanordnungen gewinnen die Probleme der parasitären Induktivitäten wachsend an Bedeutung. So sind Versuche publiziert, alle Gleichstrom führenden Teile mit ihren beiden Anschlüssen untereinander so nahe wie irgend möglich zu positionieren. Umrichter nach den erfinderischen Prinzipien hergestellt, erfüllen alle Anforderungen eines induktivitätsarmen Aufbaus.

## Patentansprüche

1. Umrichter der Leistungsklasse für hohe Anforderungen mit einer Leistungselektronik (26) in Form von einer Mehrzahl von Leistungsschalternwie Transistoren und Dioden, in hybrider Aufbauweise auf mindestens einer Isolierkeramik, einer Sensorik, einer flächigen Zwischenkreisverschienung (10, 11, 12) mit Kondensatoren (18), einer Ansteuerschaltung (22) und einem Mikrokontroller
**dadurch gekennzeichnet, daß**
die Kondensatoren (18) und die Leistungselektronik (26) niederinduktiv und eng benachbart einerseits unterhalb der flächigen Zwischenkreisverschienung (10, 11, 12) elektrisch leitend mit dieser schaltungsgerecht verbunden und andererseits in einer Ebene und auf einem gemeinsamen Kühlkörper (16) elektrisch isoliert wärmeableitend positioniert sind, wobei mindestens die Kondensatoren (18) und die Leistungselektronik (26) und alternativ weitere Schaltungselemente, wie Sensorik und Ansteuerschaltungen (22), in einem Gehäuse (25) plaziert sind und wobei die Kondensatoren (18), die Sensorik und die Leistungselektronik (26) mit der Zwischenkreisverschienung (10, 11) und diese wiederum mit der Ansteuerschaltung (22) schaltungsgerecht elektrisch direkt oder mittels Kontaktfedern (23) indirekt verbunden sind und die Leistungsanschlüsse (27) seitlich aus dem gemeinsamen Gehäuse (25) herausgeführt werden.

2. Umrichter nach Anspruch 1, **dadurch gekennzeichnet, daß**
die Kondensatoren (18) in ihrer Bauform im Querschnitt rechteckig gewickelte Kondensatorlagen besitzen, beide Elektroden niederinduktiv auf der oberen Seite herausgeführt werden und so bemessen sind, daß sie der Höhe der Aufbauten der Leistungselektronik (26) und der Sensorik angepaßt sind.

3. Umrichter nach Anspruch 2, **dadurch gekennzeichnet, daß**
die Elektroden der Kondensatoren (18) direkt mit je einer der beiden Zwischenkreiselektroden (10, 11) stoffschlüssig oder stoffbündig elektrisch kontaktiert sind.

## Claims

1. Converter of the power class for high requirements with power electronics (26) in the form of a plurality of circuit breakers, such as transistors and diodes, in a hybrid design on at least one insulating ceramic, sensors, a two-dimensional intermediate circuit rail (10, 11, 12) with capacitors (18), a trigger circuit (22), and a microcontroller,
**characterized in that**,
the capacitors (18) and the power electronics (26) are connected to be low conductive and compact, on the one hand, beneath the two-dimensional intermediate circuit rail (10, 11, 12) and electrically conductive with this as a circuit and, on the other hand, are positioned in a plane and on a common cooling body (16) to be electrically insulated and heat conductive, wherein at least the capacitors (18) and the power electronics (26) and alternatively further circuit elements, such as sensors and trigger circuits (22), are placed in a housing (25), and wherein the capacitors (18), the sensors, and the power electronics (26) are connected indirectly with the intermediate circuit rail (10, 11) and these, in turn, are connected with the trigger circuit (22) directly electrically to form a circuit or are connected indirectly by means of contact springs (23) and the power connections (27) are lead through laterally from the common housing (25).

2. Converter according to claim 1, **characterized in that**, the capacitors (18) have capacitor bearings that are wound to be rectangular in their cross section, both electrodes are lead through in a low conductive manner on the upper side and are dimensioned, such that they are adapted to the height of the structure of the power electronics (26) and the sensors.

3. Converter according to claim 2, **characterized in that**,
the electrodes of the capacitors (18) are electrically contacted to be adhesively joined or materially connected with a respective one of the two intermediate circuit electrodes (10, 11).

## Revendications

1. Convertisseur de la classe de puissance répondant à de grandes exigences doté d'une électronique de puissance (26) sous la forme d'une multiplicité d'interrupteurs de puissance, tels que des transistors et des diodes, de conception hybride sur au moins une céramique isolante, avec une technique sensorielle, un système plan de barres conductrices de circuit intermédiaire (10, 11, 12) avec condensateurs (18), un circuit de commande (22) et un microcontrôleur,
**caractérisé en ce que**
les condensateurs (18) et l'électronique de puissance (26) sont à basse inductance et sont positionnés très près les uns des autres d'une part électriquement conducteurs en dessous du système plan de barres conductrices de circuit intermédiaire (10, 11, 12) et reliés à ce dernier conformément au montage et d'autre part électriquement isolés et dissipateurs de chaleur dans un plan et sur un corps de refroidissement commun (16), les condensateurs (18) et l'électronique de puissance (26) au moins, et selon une variante, d'autres éléments de circuit, tels que technique sensorielle et circuits de commande (22), étant placés dans un boîtier (25), les condensateurs (18), la technique sensorielle et l'électronique de puissance (26) étant reliés électriquement directement et conformément au montage au système plan de barres conductrices de circuit intermédiaire (10, 11), et ce dernier étant de même relié au circuit de commande (22), ou bien ces liaisons sont réalisées indirectement au moyen de ressorts de contact (23) et les bornes de puissance (27) sont sorties latéralement du boîtier commun (25).

2. Convertisseur selon la revendication 1, **caractérisé en ce que** les condensateurs (18) ont quant à leur forme de construction des couches de condensateur retournées à angle droit en leur section transversale et que les deux électrodes sont sorties à basse inductance sur le côté supérieur et sont dimensionnées de telle sorte qu'elles sont adaptées à la hauteur des structures de l'électronique de puissance (26) et de la technique sensorielle.

3. Convertisseur selon la revendication 2, **caractérisé en ce que** les électrodes des condensateurs (18) sont en contact électrique direct, par liaison ou affleurement de matière, avec à chaque fois l'une des deux électrodes de circuit intermédiaire (10, 11).
